Europäisches Patentamt

European Patent Office

Office européen des brevets

(11) Veröffentlichungsnummer: **0 228 989**
**A1**

(12) **EUROPÄISCHE PATENTANMELDUNG**

(21) Anmeldenummer: 86810489.4

(22) Anmeldetag: 31.10.86

(51) Int. Cl.⁴: **D 03 D 49/60**
F 16 B 3/00

(30) Priorität: 17.12.85 CH 5368/85

(43) Veröffentlichungstag der Anmeldung:
15.07.87 Patentblatt 87/29

(84) Benannte Vertragsstaaten: BE DE FR IT

(71) Anmelder: **GEBRÜDER SULZER
AKTIENGESELLSCHAFT
Zürcherstrasse 9
CH-8401 Winterthur (CH)**

(72) Erfinder: **Schwarz, Erwin
Diensbach 11
CH-8340 Hinwil (CH)**

(54) **Webmaschine.**

㊐ Eine Vorrichtung zur Befestigung von gewebebildenden Teilen an der Weblade (1) einer Webmaschine enthält zur Aufnahme von Befestigungsschrauben (4,6) ein Klemmstück (51,52,71,72), das als Nutenstein ausgebildet ist. Es stützt sich nur auf einer Seite einer parallel zur Längserstreckung der Weblade durch die Schraubenachsen gelegten Ebene unmittelbar auf der Weblade ab. Dadurch können die Befestigungselemente (6,91,140) im vormontierten Zustand in die entsprechende Nut (16) der Weblade (1) eingeführt werden, wodurch die Montagezeit gering ist. Je nach Ausführung der Vorrichtung ergibt sich gegenüber bekannten Lösungen der Vorteil einfacherer Fabrikationen bzw. geringer Masse des Webladeprofils.

FIG. 2

EP 0 228 989 A1

**Beschreibung**

Webmaschine

Die Erfindung betrifft eine Vorrichtung zur Befestigung von gewebebildenden Teilen an der Weblade einer Webmaschine mit mindestens einem Nutenstein und einer Schraube, wobei die Schraube durch ein zu befestigendes Teil durchgesteckt ist und in den Nutenstein, der in einer Nut der Weblade sitzt, eingeschraubt ist.

Bei der Entwicklung von Webmaschinen mit grossen Schusseintragsleistungen, die durch hohe Arbeitsfrequenzen erreicht werden, kommt es darauf an, dass besonders die rhythmisch hin- und herbewegten Organe möglichst massenarm gestaltet werden. Dies trifft besonders auf die Weblade und die an ihr befestigten Teile für den Schusseintrag und Schussanschlag zu. Andererseits müssen die zugehörigen Befestigungselemente bedienungsfreundlich ausgeführt werden, damit die Stillstandszeiten der Webmaschinen kurz bleiben.

Zur Aufnahme des Riets oder z.B. der Hilfsdüsen bei Lufteintrag dient bei modernen Maschinen in der Regel ein stranggezogenes Leichtmetallprofil, mit welchem diese Teile lösbar verbunden sein müssen. In der US-Patentschrift 4 489 762 ist eine Weblade dargestellt, die zur Aufnahme von Befestigungselementen durchgehende Nuten aufweist. Darin können T-Nutensteine als Muttern für Befestigungs schrauben eingesetzt werden. Bei anderen Webladen ohne Nutensteine sind Gewindelöcher im Ladenprofil, die unter relativ grossem Aufwand gebohrt sind und leicht beschädigt werden können. Bei der Befestigungsart in der erwähnten US-Patentschrift 4 489 762 erfordert die Montage von Riet und Hilfsdüsen einiges Geschick vom Bedienungspersonal, wenn die Befestigungsschrauben in die Gewindelöcher der leicht verschiebbaren Nutensteine eingesetzt werden. Ein entsprechend grosser Zeitaufwand ist mit dieser Tätigkeit verbunden. Ein weiterer Nachteil der nach der erwähnten US-Patentschrift bekannten Lösung ist der relativ grosse Materialaufwand, der durch die Führungsrinnen mit trapezförmigem Querschnitt für Riet und Hilfsdüsen und für die darunterliegende T-Nut nötig ist.

Es ist Aufgabe dieser Erfindung, die Nachteile bekannter Lösungen zu beseitigen, indem eine Befestigungsvorrichtung geschaffen wird, die ein rasches Einsetzen vormontierter Elemente in die Weblade gestattet und zudem platzsparend bzw. kostengünstig ist. Diese Aufgabe wird dadurch gelöst, dass der Nutenstein als Klemmstück ausgeführt ist, das nur auf einer Seite einer parallel zur Längserstreckung der Weblade durch die Schraubenachse gelegten Ebene eine Klemmfläche besitzt, mit der es sich gegen die Zugkraft der Schraube unmittelbar auf der Weblade abstützt. Das Klemmstück ist vorzugsweise als in Richtung der Längserstreckung der Weblade prismatischer Körper gestaltet. Durch diese Bauart wird bei geringem Platzbedarf eine schnell montierbare und sicher festsitzende Verschraubung realisiert. Bei der Montage bzw. bei Wartungsarbeiten können Klemmstück und Klemmschraube zur Befestigung eines gewebebildenden Teils als vormontierte Einheit in die Weblade eingesetzt werden, da die lichte Weite der jeweiligen Nut in der Weblade, quer zur Einschieberichtung des Klemmstücks in die Nut gemessen, grösser als die entsprechende Breite des Klemmstücks ist.

Im folgenden wird die Erfindung anhand der Figuren in verschiedenen Ausführungen beschrieben. Es zeigen:

Fig. I eine perspektivische Darstellung eines Teils einer Weblade I mit einer darauf befestigten Hilfsdüse 2, welche in einem Düsenhalter 3 sitzt;

Fig. 2 eine zugehörige Ansicht auf die Weblade in Längsrichtung mit einem Düsenhalter im Querschnitt und mit Befestigungselementen gemäss der Erfindung;

Fig. 3 eine Ansicht in gleicher Richtung mit anderen Befestigungselementen gemäss der Erfindung.

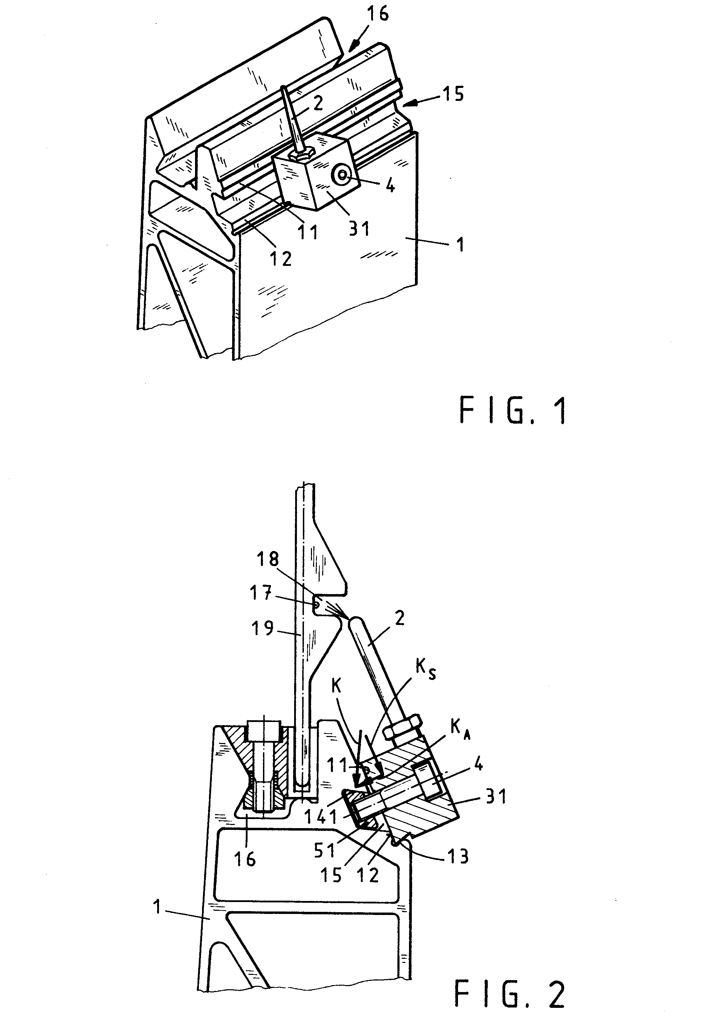

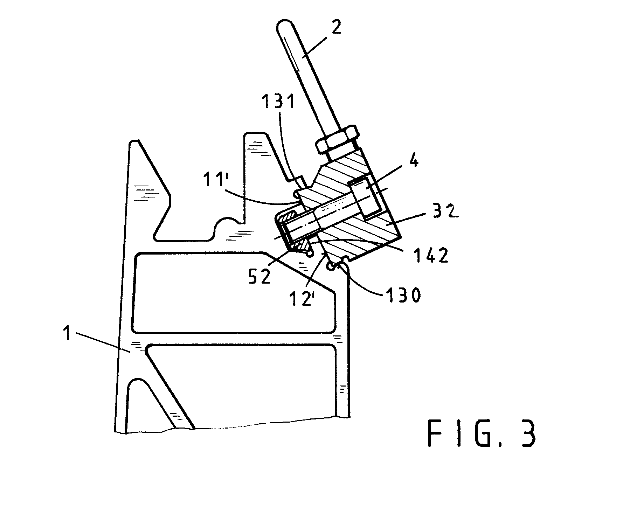

Aus der Hilfsdüse 2 in Fig. 2 strömt in Intervallen ein Luftstrahl in Richtung auf den Schusskanal I8 des Riets I9, das in die Nut I6 eingesetzt ist. Der Düsenhalter 3I liegt auf den Auflageflächen II und I2 der Weblade und wird mittels der Klemmschraube 4 gehalten, die in das Klemmstück 5I eingeschraubt ist. Das Klemmstück 5I sitzt in der Nut I5 und stützt sich über die Klemmfläche I4I auf der Weblade ab. Die Klemmfläche I4I bildet mit der Achse der Schraube 4 einen spitzen Winkel.

Durch die Vorspannung der Schraube 4 entsteht eine Reaktionskraft K von der Klemmfläche I4I auf das Klemmstück 5I. Diese Kraft kann in die Komponenten $K_A$ und $K_S$ zerlegt werden. Der Düsenhalter wird demnach mit der Kraft $K_A$ auf die Auflageflächen II und I2 und mit der Kraft $K_S$ gegen die Stützfläche I3 der Weblade gedrückt. Reibungskräfte sind bei dieser Betrachtung vernachlässigt. Mit dem Anziehen der Schraube 4 wird der Düsenhalter 3I mit der Hilfsdüse 2 also gleichzeitig auf die Auflageflächen II und I2 gedrückt und gegenüber der Stützfläche I3 ausgerichtet. Das Ausrichten aller Hilfsdüsen auf einer Weblade gegenüber einer Bezugsfläche, in diesem Fall der Stützfläche I3, ist für den Webbetrieb wichtig, weil so der Luftstrahl aus der Hilfsdüse 2 exakt auf den einzutragenden Schussfaden I7 im Schusskanal I8 zielt.

Der Düsenhalter 3I wird gemeinsam mit der Schraube 4 und dem Klemmstück 5I im vormontierten Zustand an die Weblade gebracht. Beim Aufsetzen des Düsenhalters mit der Hilfsdüse 2 auf die Weblade muss die Klemmschraube 4 nur wenig gelöst werden, damit das Klemmstück 5I in die Nut I5 eingeführt werden kann.

In Fig. 3 ist eine etwas andere Ausführungsform der Erfindung dargestellt. Das Klemmstück 52 wird im Gegensatz zum Klemmstück 5I gegen die horizontale Auflagefläche I42 in der Weblade I herangezogen. Bei dieser Konstruktion entsteht keine parallel zu den Auflageflächen II' und I2' wirkende Kraftkomponente, weshalb zur seitlichen Führung des Düsenhalters 32 die Führungsflächen l30 und l3l nötig sind. Auch bei dieser Ausführungsart muss die Befestigungsvorrichtung zum Montieren und Demontieren nicht zerlegt werden.

Durch die beschriebenen Ausführungen der Erfindung ist eine schnelle und exakte Montage der Düse auf der Weblade gewährleistet.

**Patentansprüche**

I. Vorrichtung zur Befestigung von gewebebildenden Teilen (3,l9) an der Weblade (l) einer Webmaschine mit mindestens einem Nutenstein und einer Schraube, wobei die Schraube durch ein zu befestigendes Teil durchgesteckt ist und in den Nutenstein, der in einer Nut der Weblade sitzt, eingeschraubt ist, dadurch **gekennzeichnet**, dass der Nutenstein als Klemmstück (5l,52,7l,72) ausgeführt ist, das nur auf einer Seite einer parallel zur Längserstreckung der Weblade durch die Schraubenachse gelegten Ebene eine Klemmfläche (l4l,l42,l40) besitzt, mit der es sich gegen die Zugkraft der Schraube unmittelbar auf der Weblade (l) abstützt.

2. Vorrichtung nach Anspruch l, dadurch gekennzeichnet, dass das Klemmstück (5l) als in Richtung der Längserstreckung der Weblade (l) prismatischer Körper gestaltet ist, dessen Querschnittsfläche im wesentlichen ein Parallelogramm darstellt.

3. Vorrichtung nach Anspruch l und 2, dadurch gekennzeichnet, dass ein Schenkel des Parallelogramms, das den Querschnitt des Klemmstücks (5l) umschreibt, auf der Klemmfläche (l4l) der Weblade (l) liegt.

4. Vorrichtung nach den Ansprüchen l -3, dadurch gekennzeichnet, dass die Nut (l5) zur Aufnahme des Klemmstücks (5l) in der Weblade (l) im Querschnitt im wesentlichen die Umrisse des Querschnitts des Klemmstücks (5l) aufweist.

FIG. 1

FIG. 2

0228989

2

131

11'

4

32

142

52

12'

130

1

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 345 610 (CINCINNATI MINE MACHINERY CO.) <br> * Figuren 1,3,30,31 * | 1,4 | D 03 D 49/60 <br> F 16 B 3/00 |
| A | US-A-3 700 292 (OWENS) <br> * Figur 2; Zusammenfassung * | 1 | |
| A | FR-A-2 098 357 (SULZER) <br> * Seite 3, Zeile 12 - Seite 5, Zeile 4; Figuren 1-4 * | 1,4 | |
| A | FR-A-1 551 284 (ARNOLD) <br> * Insgesamt * | 1 | |
| A,D | EP-A-0 122 087 (DRAPER) <br><br> & US-A-4 489 762 | | |

RECHERCHIERTE SACHGEBIETE (Int. Cl.4)

D 03 D
F 16 B

Der vorliegende Recherchenbericht wurde für alle Patentansprüche erstellt.

| Recherchenort | Abschlußdatum der Recherche | Prüfer |
|---|---|---|
| DEN HAAG | 24-03-1987 | BOUTELEGIER C.H.H. |